# EUROPEAN PATENT APPLICATION

(11) **EP 3 163 273 A1**
(43) Date of publication of application: **03.05.2017**
(21) Application number: 15812544.3
(22) Date of filing: 21.05.2015
(51) Int. Cl.: G01L 1/22, G01L 5/22

(54) **STRAIN SENSOR AND LOAD DETECTION DEVICE USING SAME**

(30) Priority: 27.06.2014 US 201462017840 P
(71) Applicant: Panasonic Intellectual Property Management Co., Ltd., Osaka-shi, Osaka 570-6207 (JP)
(72) Inventor: ODA, Shinpei, Chuo-ku, Osaka-shi Osaka 540-6207 (JP); OBAYASHI, Masahiko, Chuo-ku, Osaka-shi Osaka 540-6207 (JP); NAKASHIMA, Koichiro, Chuo-ku, Osaka-shi Osaka 540-6207 (JP); NABETANI, Kouji, Chuo-ku, Osaka-shi Osaka 540-6207 (JP); NOMURA, Kazuhiro, Chuo-ku, Osaka-shi Osaka 540-6207 (JP)
(74) Representative: Grünecker Patent- und Rechtsanwälte PartG mbB
(86) International application number: PCT/JP2015/002552
(87) International publication number: WO 2015/198525

(57) **Abstract**

A strain sensor is configured to detect a load. The strain sensor includes a deformable section having an annular shape, a first pressure-receiving section configured to receive the load applied thereto, a second pressure-receiving section connected to the deformable section, and a strain detecting element provided on at least one of the first pressure-receiving section and the deformable section. The first pressure-receiving section is connected to the deformable section in a first direction away from the deformable section. The second pressure-receiving section is connected to the deformable section in a second direction opposite to the first direction from the deformable section. The first pressure-receiving section is provided only in the first direction from the deformable section. The strain sensor can stably detect the load regardless of a method for applying the load.

## Description

### TECHNICAL FIELD

The present disclosure relates to a strain sensor that detects a load applied thereto and a load detection apparatus using the strain sensor.

### BACKGROUND ART

A depressing load applied to a vehicle pedal is detected by a strain sensor for detecting strain of a deformable body.

FIG. 9 is a sectional view of conventional strain sensor 1 disclosed in PTL 1. Strain sensor 1 includes deformable bodies 2 that are concentrically disposed, fixing member (first member) 3, and displacement member (second member) 4. First strain-sensitive resistor (strain detecting element) 5 is provided on an outer surface of the lower side of deformable body 2. An end of first strain-sensitive resistor 5 is electrically connected to a power electrode by a circuit pattern (not illustrated). The other end of first strain-sensitive resistor 5 is connected to a second output electrode. In addition, second strain-sensitive resistor (strain detecting element) 6 is provided to be substantially parallel with first strain-sensitive resistor 5 on an outer surface of the lower side of deformable body 2. An end of second strain-sensitive resistor 6 is electrically connected to the power electrode by a circuit pattern (not illustrated). The other end of second strain-sensitive resistor 6 is electrically connected to a first output electrode (not illustrated).

Furthermore, third strain-sensitive resistor (strain detecting element) 7 is provided on an outer surface of the upper side of deformable body 2. An end of third strain-sensitive resistor 7 is electrically connected to first strain-sensitive resistor 5 and a second output electrode by a circuit pattern (not illustrated). The other end of third strain-sensitive resistor 7 is connected to a GND electrode (not illustrated).

Furthermore, fourth strain-sensitive resistor (strain detecting element) 8 is provided to be substantially parallel with third strain-sensitive resistor 7 on an outer surface of the upper side of deformable body 2. An end of fourth strain-sensitive resistor 8 is electrically connected to second strain-sensitive resistor 6 and the first output electrode by a circuit pattern. The other end of fourth strain-sensitive resistor 8 is electrically connected to the GND electrode. This configuration constitutes a full bridge circuit.

Fixing member (first member) 3 made of ferrite based stainless steel includes mounting portion 9 having a disc shape and shaft portion 10 having therein mounting portion 9 integrated with an intermediate portion in a longitudinal direction of the shaft portion. While an opening end of deformable body 2 is closed by mounting portion 9, the outer circumference of mounting portion 9 is welded such that the outer circumference is fitted to a side edge of deformable body 2. In addition, an end of shaft portion 10 of fixing member 3 passes through an inside of deformable body 2. Displacement member (second member) 4 made of metal, such as ferrite based stainless steel, includes washer 11 having an annular shape and mounting member 12 having a cylindrical shape functioning as a case fixed to an end of washer 11. The outer circumference of washer 11 inside mounting member 12 is fixed while being welded on the other opening end of deformable body 2. Mounting portion 9, deformable body 2, and washer 11 are accommodated in mounting member 12 having the cylindrical shape functioning as the case.

Strain sensor 1 is configured to cause shear force to act on deformable body 2 by applying a load to displacement member 4 in a direction perpendicular to axial center 2A of deformable body 2.

### CITATION LIST

### PATENT LITERATURE

PTL 1: Japanese Patent No. 4230500

### SUMMARY

A strain sensor is configured to detect a load. The strain sensor includes a deformable section having an annular shape, a first pressure-receiving section configured to receive the load applied thereto, a second pressure-receiving section connected to the deformable section, and a strain detecting element provided on at least one of the first pressure-receiving section and the deformable section. The first pressure-receiving section is connected to the deformable section in a first direction away from the deformable section. The second pressure-receiving section is connected to the deformable section in a second direction opposite to the first direction from the deformable section. The first pressure-receiving section is provided only in the first direction from the deformable section.

The strain sensor can stably detect the load regardless of a method for applying the load.

### BRIEF DESCRIPTION OF DRAWINGS

FIG. 1A is a top view of a strain sensor according to an exemplary embodiment.
FIG. 1B is a side view of the strain sensor according to the embodiment.
FIG. 1C is a sectional view of the strain sensor on line IC-IC shown in FIG. 1A.
FIG. 2 is a development view of an outer circumferential surface of a deformable section of the strain sensor according to the embodiment.
FIG. 3 is a circuit diagram of the strain sensor according to the embodiment.
FIG. 4A is a partially enlarged sectional view of the strain sensor according to the embodiment having a load applied thereto.
FIG. 4B is a partially enlarged sectional view of a comparative example of a strain sensor having a load applied thereto.
FIG. 5 is a sectional view of another strain sensor according to the embodiment.
FIG. 6 is a sectional view of still another strain sensor according to the embodiment.
FIG. 7 is a side view of a load detection apparatus including the strain sensor according to the embodiment.
FIG. 8 is a sectional view of the load detection apparatus on line VIII-VIII shown in FIG. 7.
FIG. 9 is a sectional view of a conventional strain sensor.

### DETAIL DESCRIPTION OF PREFERRED EMBODIMENT

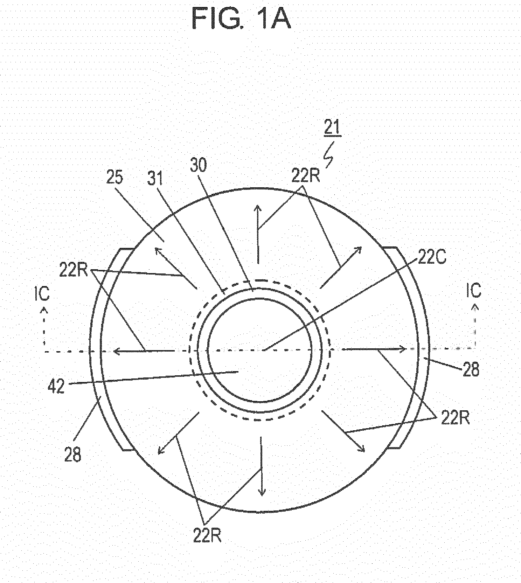

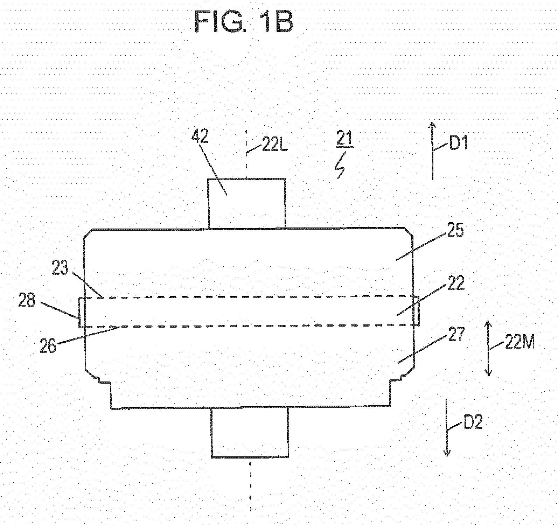

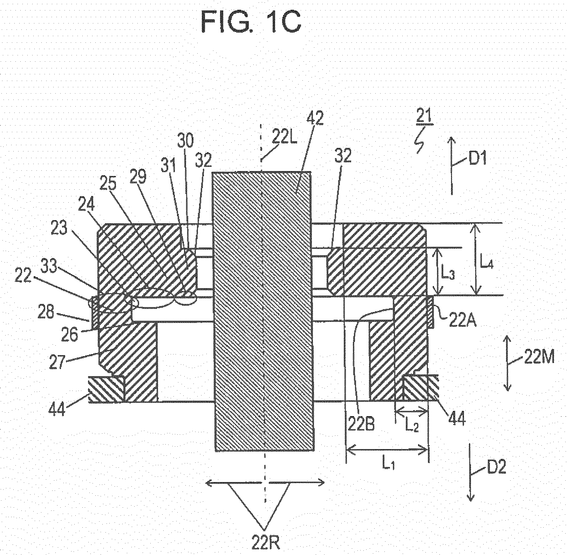

FIG. 1A and FIG. 1B are a top view and a side view of strain sensor 21 according to an exemplary embodiment, respectively. FIG. 1C is a sectional view of strain sensor 21 on line IC-IC shown in FIG. 1A.

Strain sensor 21 includes deformable section 22, pressure-receiving sections 25 and 27 connected to deformable section 22, and strain detecting element 28 provided on deformable section 22. Deformable section 22 has an annular shape surrounding center axis 22L. The annular shape of deformable section 22 has opening portions 23 and 26 disposed on opposite to each other along center axis 22L. Pressure-receiving section 25 is connected to opening portion 23 of deformable section 22. Pressure-receiving section 25 has surface 24 connected to opening portion 23. Surface 24 faces opening portion 23 of deformable section 22. Pressure-receiving section 27 is connected to opening portion 26 of deformable section 22. Deformable section 22 having the annular shape has outer circumferential surface 22A and inner circumferential surface 22B. Outer circumferential surface 22A faces in radial direction 22R radially away perpendicularly from center axis 22L. Inner circumferential surface 22B faces center axis 22L in a direction opposite to radial direction 22R. Strain detecting element 28 is provided on outer circumferential surface 22A of deformable section 22. Pressure-receiving section 27 is configured to be fixed on fixing portion 44 (see FIG. 1C). Length L₁ of pressure-receiving section 25 in radial direction 22R is longer than length L₂ of deformable section 22 in axis direction 22M of center axis 22L. Receiving portion 31 having surfaces 29 and 30 is provided inside pressure-receiving section 25. That is, receiving portion 31 is provided in a portion of pressure-receiving section 25 in a direction opposite to radial direction 22R. Surface 24 of pressure-receiving section 25 faces deformable section 22. Surface 29 of receiving portion 31 faces deformable section 22. Length L₃ of receiving portion 31 in axis direction 22M is shorter than length L₄ of pressure-receiving section 25 in axis direction 22M. Receiving portion 31 has tapered surface 32 in which a length of a portion of receiving portion 31 in axis direction 22M decreases as the portion approaches the inside of receiving portion 31 in radial direction 22R. This configuration prevents burrs produced when receiving portion 31 is formed. This configuration can prevent stress from concentrating to a particular position on receiving portion 31. Surface 29 of receiving portion 31 faces opening portion 26 of deformable section 22. Surface 24 of pressure-receiving section 25 close to opening portion 26 and surface 29 of receiving portion 31 close to opening portion 26 are positioned on a side to opening portion 23 in axis direction 22M of connection portion 33 at which deformable section 22 is connected with pressure-receiving section 25. As described above, pressure-receiving section 25 is connected to deformable section 22 in axis direction 22M from deformable section 22 and in direction D1 away from deformable section 22. Pressure-receiving section 27 is connected to deformable section 22 in direction D2 opposite to direction D1 from deformable section 22.

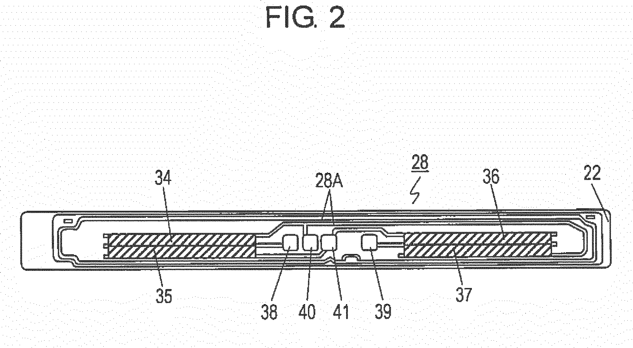

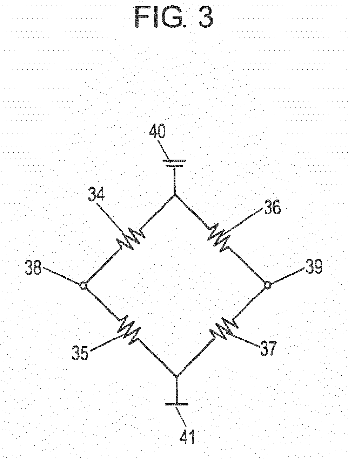

FIG. 2 is a development view of outer circumferential surface 22A of deformable section 22 of strain sensor 21 according to the embodiment. FIG. 3 is a circuit diagram of strain sensor 21 according to the embodiment. Strain detecting element 28 includes strain-sensitive resistors 34, 35, 36, and 37. Circuit pattern 28A including output electrodes 38 and 39, power electrode 40, and grounding electrode 41 is provided on outer circumferential surface 22A of deformable section 22. Strain-sensitive resistor 34 is connected in series to power electrode 40 and output electrode 38 between power electrode 40 and output electrode 38. Strain-sensitive resistor 35 is connected in series to grounding electrode 41 and output electrode 38 between grounding electrode 41 and output electrode 38. Strain-sensitive resistor 36 is connected in series to power electrode 40 and output electrode 39 between power electrode 40 and output electrode 39. Strain-sensitive resistor 37 is connected in series to grounding electrode 41 and output electrode 39 between grounding electrode 41 and output electrode 39. Strain-sensitive resistors 34 and 36 are disposed closer to pressure-receiving section 25 in axis direction 22M than strain-sensitive resistors 35 and 37. As illustrated in FIG. 3, strain detecting element 28 and circuit pattern 28A constitute a full bridge circuit. When deformable section 22 deforms, resistances of strain-sensitive resistors 34 to 37 of strain detecting element 28 changes and the change is detected to allow strain generated in deformable section 22 to be detected. Strain detecting element 28 is provided at a position on deformable section 22 which largely deforms to improve sensitivity of strain sensor 21. Strain detecting element 28 is provided on deformable section 22. However, a part of strain detecting element 28 may be provided on pressure-receiving section 25 or pressure-receiving section 27.

A method for manufacturing strain sensor 21 will be described below.

After printing glass paste on the outer circumferential surface of a base component having an annular shape and made of, e.g. elastic metal, such as stainless steel, the glass paste is fired for about ten minutes at a temperature of about 550°C, thereby providing deformable section 22. Next, silver paste is printed on outer circumferential surface 22A of deformable section 22, and is fired for about ten minutes at a temperature of about 550°C, thereby forming circuit pattern 28A. Then, resistor paste is printed on deformable section 22 and fired for about ten minutes at a temperature of about 550°C, providing strain-sensitive resistors 34 to 37 of strain sensor 21.

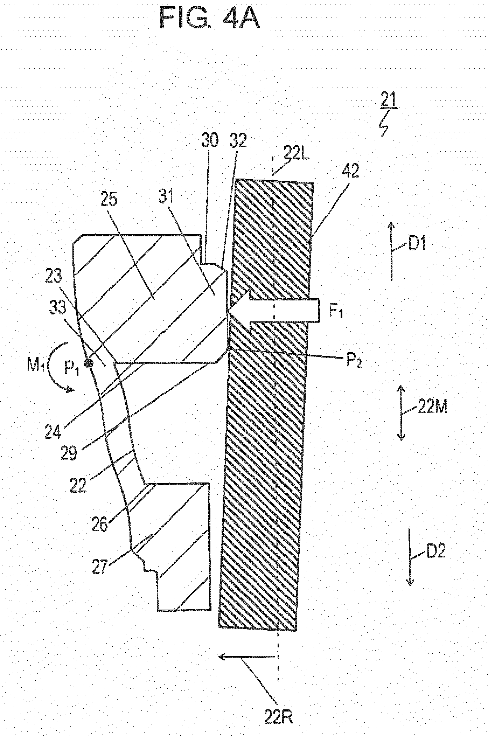

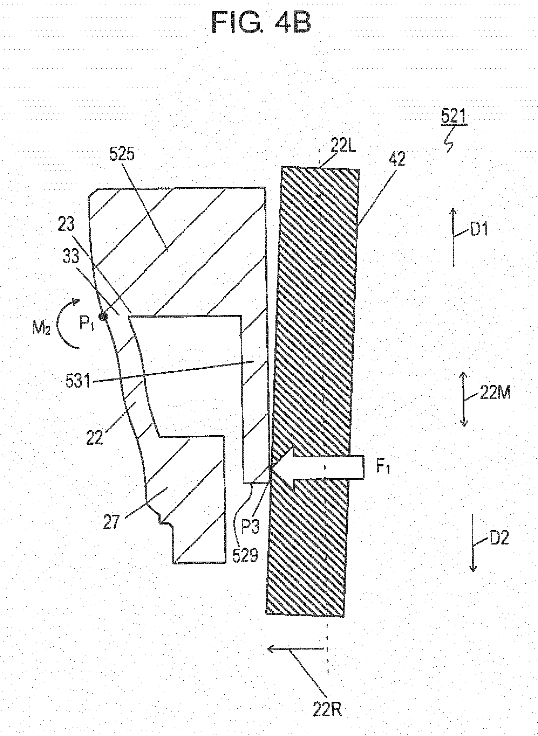

An operation of strain sensor 21 detecting a strain therein when a load is applied to strain sensor 21 will be described below. FIG. 4A is a partially enlarged sectional view of strain sensor 21 having load F₁ applied thereto. FIG. 4B is a partially enlarged sectional view of a comparative example of strain sensor 521 having load F₁ applied thereto. In FIG. 4B, components identical to those of strain sensor 21 according to the embodiment shown in FIGs. 1A to 1C are denoted bye the same reference numerals. Strain sensor 521, the comparative example, includes pressure-receiving section 525 connected to opening portion 23 of deformable section 22 via connection portion 33, instead of pressure-receiving section 25 of strain sensor 21 according to the embodiment. Pressure-receiving section 525 includes receiving portion 531 extending in direction D2 with respect to connection portion 33. Load F₁ is transmitted to deformable section 22 through position P₃ on pressure-receiving section 525 (receiving portion 531), and causes deformable section 22 to largely deform at position P₁ on deformable section 22 near connection portion 33. Strain detecting element 28 is preferably provided on position P₁ at which deformable section 22 largely deform. A moment applied to position P₁ at which a part of strain detecting element 28 is provided will be described below.

According to the embodiment, component 42 having a rod shape extending along center axis 22L applies load F₁ to receiving portion 31. Load F₁ may be applied to receiving portion 31 in radial direction 22R. Alternatively, component 42 may obliquely contact position P₂ on receiving portion 31 so that load F₁ can be applied to only a part of receiving portion 31, thereby allowing a biased load to be transmitted to pressure-receiving section 25. When component 42 obliquely contacts receiving portion 31, load F₁ may be applied from component 42 to a side to surface 30 of receiving portion 31, and may be applied from component 42 to a side to surface 29 of receiving portion 31. Operations of the strain sensors while load F₁ is transmitted to pressure-receiving section 25 in these cases will be described below.

In the case that load F₁ is applied in radial direction 22R to receiving portion 31, since pressure-receiving section 27 is fixed to fixing portion 44, load F₁ is transmitted to pressure-receiving section 25 and pushes pressure-receiving section 25 in radial direction 22R regardless of the shape of receiving portion 31. This configuration produces moment M₁ in a direction toward radial direction 22R from direction D1 of position P₁ onto position P₁.

In addition, when component 42 obliquely contacts receiving portion 31 near surface 30 of receiving portion 31 and applies a biased load to receiving portion 31, load F₁ is transmitted to pressure-receiving section 25 to push pressure-receiving section 25 in radial direction 22R regardless of the shape of receiving portion 31. This configuration produces moment M₁ in the above direction to position P₁.

Meanwhile, when component 42 obliquely contacts receiving portions 31 and 531 near surfaces 29 and 529 of receiving portions 31 and 531 and applies load F₁ unevenly to receiving portions 31 and 531, as illustrated in FIG. 4A and FIG. 4B, directions of the loads transmitted to pressure-receiving sections 25 and 525 change depending on the shapes of receiving portions 31 and 531.

In strain sensor 21 according to the embodiment illustrated in FIG. 4A, surface 29 is located in direction D1 from connection portion 33, and the load is transmitted to position P₁ in radial direction 22R, similarly to the case that load F₁ is applied to receiving portion 31 in radial direction 22R. When load F₁ is applied from component 42 to receiving portion 31, the direction of the load transmitted to pressure-receiving section 25 thus becomes radial direction 22R regardless of the direction in which component 42 contacts receiving portion 31. Accordingly, since moment M₁ in the above direction is applied to position P₁, and deformable section 22 similarly deforms regardless of the status of load F₁ applied to receiving portion 31, and can stably detect strain even being influenced by the biased load.

In contrary, in the comparative example of strain sensor 521 of illustrated in FIG. 4B, since receiving portion 31 extends in direction D2 and surface 529 is at a side in direction D2 from connection portion 33, the load applied to deformable section 22 is different from that of the case where load F₁ is applied to receiving portion 31 in radial direction 22R. Receiving portion 531 is entirely pressed by load F₁ in radial direction 22R. However, moment M₂ in a direction toward radial direction 22R from direction D2 of position P₁ is applied to position P₁ around and at a point where receiving portion 531 contacts component 42. Therefore, load F₁ is applied to the vicinity of surface 30 of receiving portion 31 and the deformation of deformable section 22 are different from those of strain sensor 21 according to the embodiment. Since the sensitivity is different according to how component 42 contacts receiving portions 31 and 531, strain sensor 521, the comparative example, may not stably detect the strain.

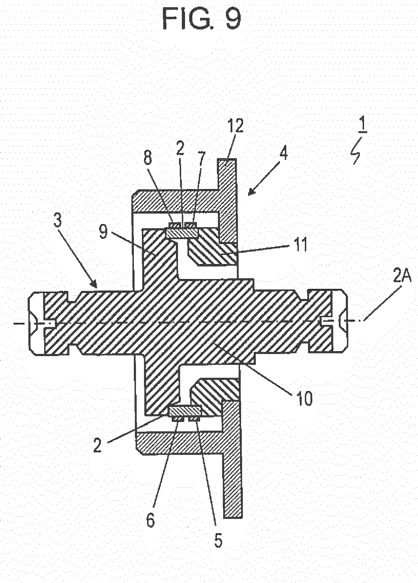

In addition, in conventional strain sensor 1 shown in FIG. 9, if a biased load is applied from fixing member 3 to deformable body 2, the sensitivity to the load changes according to how the load is applied, thus being prevented from stably detect the load.

Thus, detection sensitivity of the strain sensor largely changes due to whether surface 29 is located on a side in direction D1 or D2 from connection portion 33. Surface 29 of strain sensor 21 according to the embodiment is on a side in direction D1 from connection portion 33. That is, receiving portion 31 of pressure-receiving section 25 is configured to receive the load at a position located on a side in direction D1 from connection portion 33 in axis direction 22M, and not to receive the load at a position located on a side in direction D2 from connection portion 33 in axis direction 22M. Accordingly, strain sensor 21 can stably detect strain, the load, and can improve detection accuracy.

The direction of the load transmitted to pressure-receiving section 25 changes due to whether surface 29 is located on a side in direction D1 or D2 from connection portion 33. However, surface 29 closer to connection portion 33 can reduce the effect of the biased load. Receiving portion 31 of strain sensor 21 according to the embodiment allows surface 24 to be flush with surface 29. This configuration allows pressure-receiving section 25 and receiving portion 31 to be implemented by a single component, and can improve productivity by simplifying the process. Surface 29 is located near connection portion 33 of strain sensor 21, and can effectively reduce the effect of the biased load.

A shorter length of axis direction 22M of receiving portion 31 can reduce the effect of the unbalanced load. However, if the length is excessively short, receiving portion 31 may be fragile due to stress concentration. Accordingly, the length of receiving portion 31 in axis direction 22M may be appropriately designed according to usage applications so as not to be fragile due to the stress concentration.

Strain sensor 21 according to the embodiment includes receiving portion 31. The load may be applied from component 42 directly to pressure-receiving section 25 without via receiving portion 31. In this case, surface 24 is located on a side in direction D1 from connection portion 33, providing the effect of the embodiment.

Strain detecting element 28 may be provided on at least one of pressure-receiving section 25 and deformable section 22.

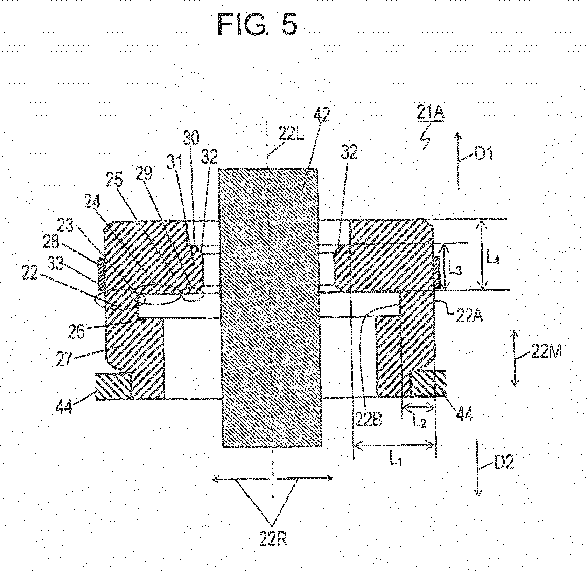

FIG. 5 is a sectional view of another strain sensor 21A according to the embodiment. In FIG. 5, components identical to those of strain sensor 21 shown in FIG. 1C are denoted by the same reference numerals. In strain sensor 21A, strain detecting element 28 is provided on pressure-receiving section 25, not on deformable section 22. Strain sensor 21A has the same effect as strain sensor 21 illustrated in FIG. 1C.

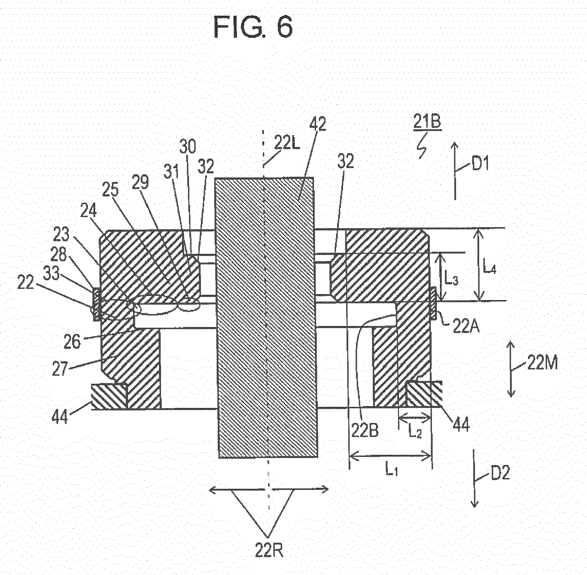

FIG. 6 is a sectional view of still another strain sensor 21B according to the embodiment. In FIG. 6, components identical to those of strain sensor 21 shown in FIG. 1C are denoted by the same reference numerals. In strain sensor 21B, strain detecting element 28 is provided on deformable section 22 and pressure-receiving section 25, not only on deformable section 22. Strain sensor 21B has the same effect as strain sensor 21 illustrated in FIG. 1C.

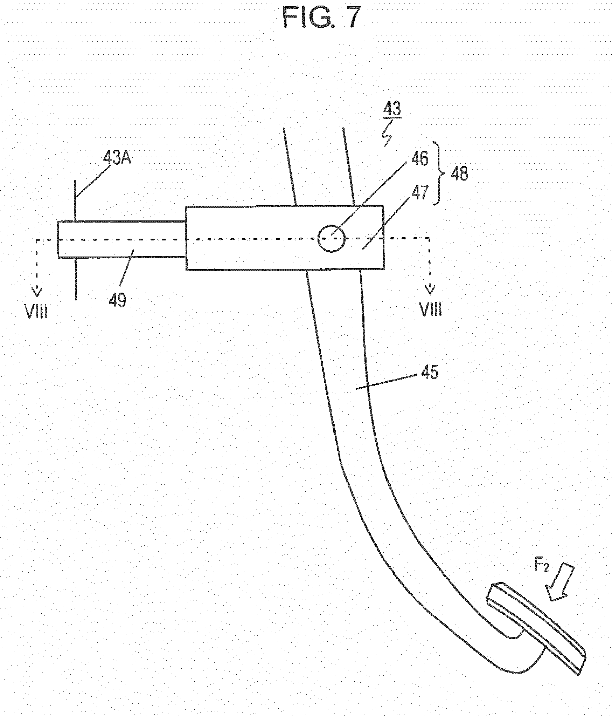

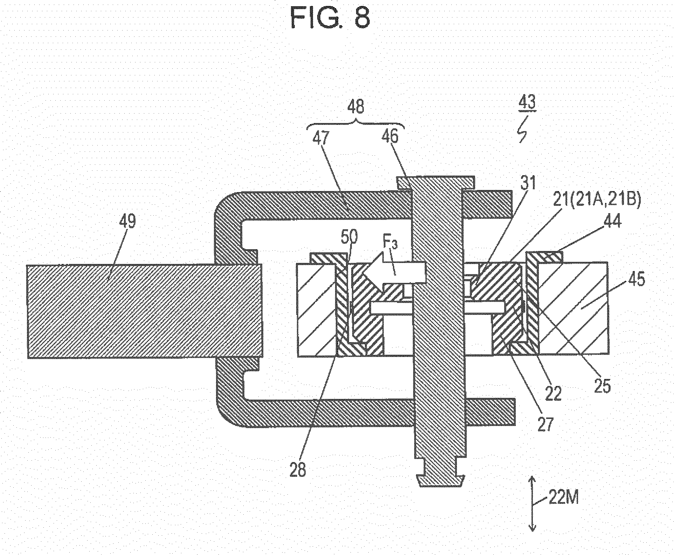

FIG. 7 is a side view of load detection apparatus 43 including strain sensor 21. (21A, 21B) according to the embodiment. FIG. 8 is a sectional view of load detection apparatus 43 on line VIII-VIII shown in FIG. 7.

Fixing portion 44 is attached to an outer circumference of pressure-receiving section 27 of strain sensor 21 (21A, 21B). Pressure-receiving section 27 is fixed to fixing portion 44.

Load detection apparatus 43 includes input section 45 that is a pedal arm having load F₂, a pedal force, input thereto, coupler 48 connected to input section 45, and transmitting section 49 connected to coupler 48 to transmit load F₂. Coupler 48 includes clevis 47 and clevis pin 46 connected to input section 45. Transmitting section 49 is an operation rod connected to clevis 47.

Hole 50 is provided in the pedal arm (input section 45). Strain sensor 21 (21A, 21B) is fitted to hole 50. Strain sensor 21 (21A, 21B) is connected to the pedal arm with, e.g. screws. Clevis pin 46 is inserted in the center of strain sensor 21 (21A, 21B) and extends in axis direction 22M of strain sensor 21 (21A, 21B). Receiving portion 31 of strain sensor 21 (21A, 21B) contacts clevis pin 46. Fixing portion 44 is fixed to contact the pedal arm.

Load detection apparatus 43 is installed to vehicle 43A. When a driver of the vehicle depresses the pedal arm (input section 45) to apply input load F₂, the pedal force, to the pedal arm, clevis pin 46 (coupler 48) is pressed toward the operation rod (transmitting section 49) with the pedal arm. Since clevis pin 46 is inserted into strain sensor 21 (21A, 21B), load F₃ is applied to receiving portion 31 in a direction of the operation rod with clevis pin 46. That is, transmitting section 49 is connected to coupler 48 to transmit load F₃ based on input load F₂ to receiving portion 31 of pressure-receiving section 25 of strain sensor 21 (21A, 21B). Load F₂ generates shear strain in deformable section 22, and the shear strain is detected by strain detecting element 28 provided on deformable section 22, thereby detecting load F₂.

Clevis pin 46 may obliquely contact strain sensor 21 (21A, 21B) depending on a pedaling of the pedal arm of the driver. However, since strain sensor 21 (21A, 21B) can reduce the effect of a biased load, strain sensor 21 (21A, 21B) can stably detect load F₂ regardless of the pedaling of the driver.

### INDUSTRIAL APPLICABILITY

A strain sensor according to the present invention can stably detect strain regardless of how the strain is transmitted, and is useful for, e.g. detection of a depression load of a vehicle pedal, detection of a cable tension of a vehicle parking brake, detection of a seat surface load of a vehicle seat.

### REFERENCE MARKS IN THE DRAWINGS

- 21: strain sensor
- 22: deformable section
- 23: opening portion (first opening portion)
- 24: surface (first surface)
- 25: pressure-receiving section (first pressure-receiving section)
- 26: opening portion (second opening portion)
- 27: pressure-receiving section (second pressure-receiving section)
- 28: strain detecting element
- 29: surface (second surface)
- 31: receiving portion
- 32: tapered surface
- 43: load detection apparatus
- 45: input section
- 48: coupler
- 49: transmitting section

## Claims

1. A strain sensor for detecting a load, comprising:
a deformable section having an annular shape;
a first pressure-receiving section connected to the deformable section in a first direction away from the deformable section, the first pressure-receiving section being configured to receive the load applied thereto;
a second pressure-receiving section connected to the deformable section in a second direction opposite to the first direction from the deformable section; and
a strain detecting element provided on at least one of the first pressure-receiving section and the deformable section,
wherein the first pressure-receiving section is provided only in the first direction from the deformable section.

2. The strain sensor of claim 1,
wherein the annular shape of the deformable section surrounds a center axis extending in an axis direction,
wherein the first pressure-receiving section includes a receiving portion provided at a portion of the first pressure-receiving section in a direction opposite to a radial direction away from the center axis, and
wherein a length of the receiving portion in the axis direction is shorter than a length of the first pressure-receiving section in the axis direction.

3. The strain sensor of claim 2,
wherein the first pressure-receiving section has a first surface facing the deformable section, and
wherein the receiving portion has a second surface facing the deformable section.

4. The strain sensor of claim 3, wherein the first surface is flush with the second surface.

5. The strain sensor of claim 1,
wherein the annular shape of the deformable section surrounds a center axis extending in an axis direction, and
wherein the first pressure-receiving section has a tapered surface in which a length of a portion of the first pressure-receiving section in the axis direction decreases as the portion of the first pressure-receiving section approaches a direction opposite to a radial direction away from the center axis.

6. A load detection apparatus comprising:
the strain sensor of any one of claims 1 to 5;
an input section having an input load applied thereto;
a coupler connected to the input section; and
a transmitting section that is connected to the coupler, and transfers a load based on the input load to the first pressure-receiving section of the strain sensor.
